# EUROPEAN PATENT SPECIFICATION

(11) **EP 2 841 499 B1**
(45) Date of publication and mention of the grant of the patent: **30.11.2016**
(21) Application number: 12875606.1
(22) Date of filing: 27.04.2012
(51) Int. Cl.: C08L 63/00, C08G 59/26, C08G 59/62, C08G 59/42

(54) **CURABLE EPOXY RESIN COMPOSITIONS AND COMPOSITES MADE THEREFROM**
HÄRTBARE EPOXIDHARZZUSAMMENSETZUNGEN UND DARAUS HERGESTELLTE VERBUNDSTOFFE
COMPOSITIONS DE RÉSINE ÉPOXY DURCISSABLE ET COMPOSITES À BASE DE CELLES-CI

(43) Date of publication of application: 04.03.2015
(73) Proprietor: Dow Global Technologies LLC, Midland, MI 48674 (US)
(72) Inventor: QI, Lejun, Shanghai 201204 (CN); DU, Wei, Shanghai 201100 (CN); ZHANG, Yi, Shanghai 200042 (CN)
(74) Representative: Beck Greener
(86) International application number: PCT/CN2012/074828
(87) International publication number: WO 2013/159339

(56) References cited:
- WO-A1-2010/102421
- WO-A1-2012/046553
- WO-A2-2011/119216
- WO-A2-2011/163282
- JP-A- H08 127 635
- JP-A- 2008 056 848
- US-A- 5 545 697
- US-A1- 2007 265 427

## Description

### FIELD

The present application relates to a curable epoxy resin composition. The present application also relates to a composite comprising a continuous reinforcing fiber embedded in a thermoset resin, a process for preparing the composite and a cable comprising thereof.

### BACKGROUND

Epoxy resin compositions are widely used in electrical infrastructures, for example, dry-type transformers, gas-insulated switchgears and electrical cables. In the past decade, epoxy resin compositions have extended their applications in electrical transmission, especially a new type of overhead transmission cables. This kind of overhead transmission cable typically comprises a polymeric composite core (for carrying weight) wrapped with an electrical conductor (for transmitting power). The polymeric composite core comprises at least one reinforcing fiber embedded in a thermosetting resin matrix (for example, epoxy resins). A composite core based on epoxy resin compositions can provide many advantages over conventional steel cores including, for example lighter weight, lower coefficient of thermal expansion, higher operating temperatures with less line sag than conventional steel cores.

In addition, there is always an interest in the industry to increase transmission capacity of cables. A composite core must have certain properties that allow for increasing the transmission capacity of cables without inducing excessive line sag. Such properties include high tensile strength (at least 2,400 Megapascals (MPa) as measured by ASTM D3039-08) and high temperature resistance (that is, glass transition temperature (Tg) of at least 160 degree C (°C)). At the same time, cables need to be flexible so they can be wound around a winding wheel for transportation and/or pulled over a pulley during installation. Therefore, a composite core should also have a minimum winding diameter of 55D or lower (D is the diameter of the composite core). "Minimum winding diameter" is the smallest diameter about which the composite core can be wound around without showing visible damages on the surface of the composite core or an obvious decrease of tensile strength (that is, the tensile strength of the composite core decreases more than 10% after winding compared to the tensile strength of the composite core before winding). However, increasing tensile strength and/or glass transition temperature usually causes an increase in the minimum winding diameter.

In addition, it is desirable to prepare cable composite cores by pultrusion. Thus, an epoxy resin composition should have a viscosity less than 3,000 Millipascals.Second (mPa.s) at 25 °C to afford satisfactory processability of pultrusion.

An incumbent cable composite core is made from an epoxy resin composition, which comprises a cycloaliphatic epoxy resin blending with a bisphenol-A epoxy resin and/or a novolac epoxy resin. This incumbent composite core has a desired T_{g} and a minimum winding diameter, but its tensile strength is undesirably lower than 2,400MPa.

WO 2010/102421 describes thermosettable compositions including an amphiphilic block copolymer, a polyol, an epoxy resin containing at least 2 oxirane rings per molecule, an anhydride hardener containing an average of at least 1 anhydride ring per molecule, and a catalyst.

WO 2011/163282 discloses diluent-free epoxy resin compositions and composites made therefrom. The epoxy resin compositions utilize divinylarene dioxides such as divinylbenzene dioxide (DVDBO) to provide compositions having enhanced performance properties.

Therefore, it would be an advance in the art to provide a curable epoxy resin composition, wherein the composition upon curing provides a composite core that exhibits a tensile strength of at least 2,400 MPa, a T_{g} of at least 160°C, and a minimum winding diameter of 55D or lower; and that is capable of being prepared by pultrusion.

### BRIEF SUMMARY

The present invention solves the problems of prior art composite cores by providing a curable epoxy resin composition, wherein the composition upon curing provides a composite core that exhibits a tensile strength of at least about 2,400 MPa, a Tg of at least about 160°C, and a minimum winding diameter of about 55D or lower; and that is capable of being prepared by pultrusion.

The curable epoxy resin composition of this invention comprises a novel combination of (a) a cycloaliphatic epoxy resin and (b) an oxazolidone ring containing epoxy resin, (c) at least one anhydride curing agent, and (d) at least one toughening agent, wherein the composition upon curing provides a composite with an increased tensile strength and a high T_{g} without compromising the minimum winding diameter property of the composite. The curable epoxy resin composition also has a viscosity of less than about 3,000 mPa.s (ASTM D-2983 at 25° C), which provides the composition with satisfactory pultrusion processability.

The invention also provides a composite comprising a continuous reinforcing fiber embedded in a thermoset resin matrix, the thermoset being a reaction product of the curable epoxy resin composition. Surprisingly, the composite of this invention has a tensile strength of at least 2,400 MPa or higher as measured by ASTM D3039-08 test, a glass transition temperature of at least 160 °C or higher as measured by dynamic mechanical analysis (DMA), at the same time, a minimum winding diameter of 55D or lower (D is the diameter of the composite). The minimum winding diameter is measured by first winding a composite around a series of cylinders having a predetermined diameter respectively

(winding speed: a linear distance around the perimeter of the cylinder equivalent to 2D per minute), and then loosing the composite. The surface of the composite core should not have visible damages or a significant decrease of tensile strength. The minimum diameter of the cylinder about which the composite can be wound without visible damages or an obvious decrease of tensile strength is recorded as D_{c}, and then the minimum winding diameter (D_{w}) is represented by nD, where n is a value calculated by D_{c} divided by D.

In a first aspect, the present invention is a curable epoxy resin composition, comprising (a) from 60 to 85 weight percent (wt %) of a cycloaliphatic epoxy resin, (b) from 15 to 35 wt % of an oxazolidone ring containing epoxy resin, (c) at least one anhydride hardener, and (d) at least one toughening agent, where wt % values are relative to total weight of epoxy resins in the curable epoxy resin composition.

In a second aspect, the present invention is a process for preparing the curable epoxy resin composition of the first aspect, comprising admixing (a) from 60 to 85 weight percent of a cycloaliphatic epoxy resin, (b) from 15 to 40 weight percent of an oxazolidone ring containing epoxy resin, (c) at least one anhydride hardener, and (d) at least one toughening agent, where weight percent values are relative to total weight of epoxy resins in the curable epoxy resin composition.

In a third aspect, the present invention is a composite comprising a continuous reinforcing fiber embedded in a thermoset resin, wherein the thermoset resin is a reaction product of the curable epoxy resin composition of the first aspect.

In a fourth aspect, the present invention is a process for preparing the composite of the third aspect, comprising pulling a continuous reinforcing fiber, contacting the reinforcing fiber with the curable epoxy resin composition, and curing the curable epoxy resin composition.

In a fifth aspect, the present invention is a cable comprising a core surrounded by metal conductor, wherein the core comprises the composite of the third aspect.

### BRIEF DESCRIPTION OF THE DRAWINGS

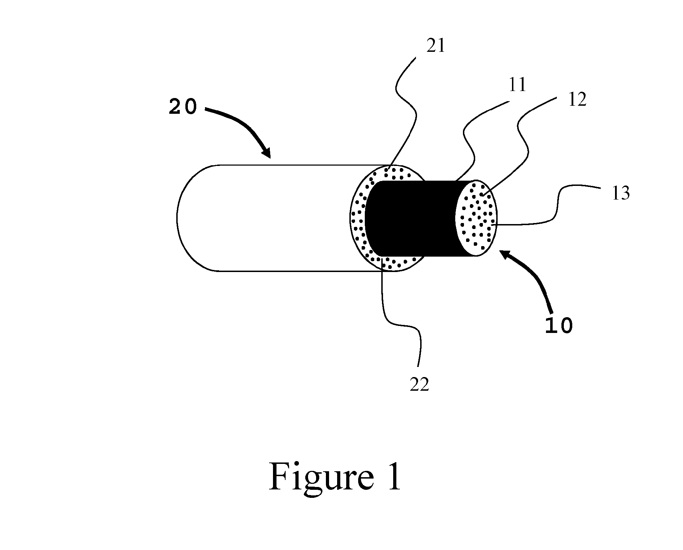

Figure 1 is a schematic illustration of one embodiment of a composite of this invention.

### DESCRIPTION

Test methods refer to the most recent test method as of the priority date of this document when a date is not indicated with the test method number. References to test methods contain both a reference to the testing society and the test method number. The following test method abbreviations and identifiers apply herein: ASTM refers to American Society for Testing and Materials.

"And/or" means "and, or as an alternative". All ranges include endpoints unless otherwise indicated.

With reference to Figure 1, there is shown a schematic perspective view of an elongated cylindrical composite including an inner core **10** having an outer surface **11** surrounded by and enclosed with an outer sheath **20** juxtaposed on the outer surface **11** of the inner core **10.** The inner core **10** also comprises a plurality of fibers **12** embedded in a cured resin matrix **13.** The outer sheath **20** also comprises a plurality of fibers **21** embedded in a cured resin matrix **22.**

The diameter of the composite (that is, the diameter of the inner core **10** plus the thickness of the outer sheath **20**) can vary to convenience depending on applications. For a cable core application, for example, generally the diameter of the inner core **10** may be from about 2 to about 30 millimeters (mm) in one embodiment, from about 4 to about 20 mm in another embodiment and from about 5 to about 10 mm in still another embodiment. The thickness of the outer sheath **20** may be generally from about 0.1 to about 10 in one embodiment, from about 0.2 to about 5 mm in another embodiment, and from about 0.5 to about 4 mm in still another embodiment.

The cycloaliphatic epoxy resin used in this invention includes for example a hydrocarbon compound containing at least one non-aryl hydrocarbon ring structure and containing at least one epoxy group. The epoxy group in the cycloaliphatic epoxy compound may include, for example, an epoxy group fused to the ring structure and/or an epoxy group residing on an aliphatic substituent of the ring structure. The cycloaliphatic epoxy resin may be a monoepoxide compound. Preferably, the cycloaliphatic epoxy resin has two or more epoxy groups. The cycloaliphatic epoxy resin may include cycloaliphatic epoxides modified with glycols. Mixtures of two or more cycloaliphatic epoxy resins may be used in this invention.

In one preferred embodiment, the cycloaliphatic epoxy resin has an epoxy group fused to the non-aryl hydrocarbon ring structure, which is a saturated carbon ring having an epoxy oxygen bonded to two vicinal atoms in the carbon ring. Cycloaliphatic epoxy resins, for example those described in U.S. Patent No. 3,686,359, may be used in the invention.

Examples of suitable cycloaliphatic epoxy resins useful in this invention include, diepoxides of cycloaliphatic esters of dicarboxylic acids, such as bis(3,4-epoxycyclohexylmethyl)oxalate; bis(3,4-epoxycyclohexylmethyl)adipate; bis(3,4-epoxy-6-methylcyclohexylmethyl)adipate; bis(3,4-epoxycyclohexylmethyl)pimelate; vinylcyclohexene diepoxide; 3,4-epoxycyclohexylmethyl-3,4-epoxycyclohexane carboxylate; limonene diepoxide; bis[(3,4-epoxycyclohexyl)methyl]dicarboxylates; bis[(3,4-epoxy-6-methylcyclohexyl) methyl]dicarboxylates; glycidyl 2,3-epoxycyclopentyl ether; cyclopentenyl ether diepoxide; 2,3-epoxycyclopentyl-9,10-epoxystearate; 4,5-epoxytetrahydrophthalic acid diglycidyl ester; bis(2,3-epoxycyclopentyl)ether; 2-(3,4-epoxycyclohexyl)-5,5-spiro(2,3-epoxycyclohexane)-m-dioxane; 2-(3,4-epoxycyclohexyl)-5,5-spiro(3,4-epoxy cyclohexane)-m-dioxane; (3,4-epoxy-6-methylcyclohexyl)methyl 3,4-epoxy-6-methylcyclohexane and 1,2-bis(2,3-epoxycyclopentyl)ethane; dicyclopentadiene diepoxide; and mixtures thereof. Other suitable diepoxides of cycloaliphatic esters of dicarboxylic acids include those described, for example, in U.S. Patent No. 2,750,395.

Other cycloaliphatic epoxides useful in this invention include for example 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-methylcyclohexane carboxylate; 6-methyl-3,4-epoxycyclohexylmethylmethyl-6-methyl-3,4-epoxycyclohexane carboxylate; 3 ,4-epoxy-2-methylcyclohexylmethyl-3,4-epoxy-2-methyl cyclohexane carboxy late; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate, di- or polyglycidyl ethers of cycloaliphatic polyols such as 2,2-bis(4-hydroxycyclohexyl) propane; and mixtures thereof. Other suitable 3,4-epoxycyclohexylmethyl-3,4-epoxycyclohexane carboxylates useful in this invention include those described, for example, in U.S. Patent No. 2,890,194.

Suitable commercially available cycloaliphatic epoxy resins useful in this invention include for example ERL™4221 (ERL is a trademark of The Dow Chemical Company) available from The Dow Chemical Company, bis(2,3-epoxycyclopentyl) ether; CELLOXIDE™ 2021 (CELLOXIDE is a trademark of Daicel Chemical Industries), CELLOXIDE 2021P, CELLOXIDE 2021A, EPOLEADGT301 and EPOLEADGT401 alicyclicepoxides, diepoxides, and triepoxides, all available from Daicel Chemical Industries; flame retardant epoxy resins (such as a brominated bisphenol type epoxy resin available under the tradename D.E.R. 542, available from The Dow Chemical Company); and mixtures thereof. In addition, other cycloaliphatic epoxy resins available under the tradename designations ERL, D.E.R. and D.E.N., all available from the Dow Chemical Company may also be used.

In one embodiment, the amount of the cycloaliphatic epoxy resin in the curable epoxy resin composition may be generally about 60 wt % or more; about 62 wt % or more in another embodiment, about 65 wt % or more in still another embodiment, and about 70 wt % or more in yet another embodiment, while at the same time, the amount of the cycloaliphatic epoxy resin in the curable epoxy resin composition may be generally about 85 wt % or less, about 83 wt % or less in another embodiment, about 80 wt % or less in still another embodiment, based on the total weight of epoxy resins in the curable epoxy resin composition. If the amount of the cycloaliphatic epoxy resin is too low, the glass transition temperature of the composite made thereof is too low; and then, the viscosity of the curable epoxy resin composition may become too high and not suitable for pultrusion. On the contrary, if the amount of the cycloaliphatic epoxy resin is too high; the tensile strength of the composite made thereof may be inferior, and the thermoset resin obtained therefrom is too brittle.

The oxazolidone ring containing epoxy resin useful in this invention may comprise an epoxy resin having a structure of the following Formula (I): 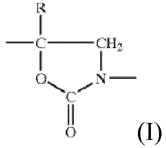 where R is hydrogen or a methyl group.

In one preferred embodiment, the oxazolidone ring containing epoxy resin used herein may comprise a reaction product of at least one epoxy resin and at least one isocyanate compound.

The epoxy resin to prepare the oxazolidone ring containing epoxy resin may comprise an aliphatic epoxy resin, an aromatic epoxy resin, or combination of an aliphatic epoxy resin and an aromatic epoxy resin.

Examples of the aliphatic epoxy resins used to prepare the oxazolidone ring containing epoxy resin, may include polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers; and mixtures thereof. Some particular examples of the aliphatic epoxy resins useful in this invention include, glycidyl ethers of polyols such as 1,4-butanediol diglycidyl ether, 1,6- hexanediol diglycidyl ether, a triglycidyl ether of glycerin, a triglycidyl ether of trimethylol propane, a tetraglycidyl ether of sorbitol, a hexaglycidyl ether of dipentaerythritol, a diglycidyl ether of polyethylene glycol or a diglycidyl ether of polypropylene glycol; polyglycidyl ethers of poly ether polyols obtained by adding one type, or two or more types, of alkylene oxide to aliphatic polyols such as propylene glycol, trimethylol propane, and glycerin; diglycidyl esters of aliphatic long-chain dibasic acids; and mixtures thereof. A combination of aliphatic epoxy resins may be used in this invention.

Examples of the aromatic epoxy resins used to prepare the oxazolidone ring containing epoxy resin may include diglycidyl ether of polyphenols such as hydroquinone, resorcinol, bisphenol A, bisphenol F, 4,4'-dihydroxybiphenyl, novolac, tetrabromobisphenol A, 2,2-bis(4-hydroxyphenyl)-1,1,1,3,3,3-hexafluoropropane, 1,6- dihydroxynaphthalene; and mixtures thereof. A combination of aromatic epoxy resins may be used in this invention.

The isocyanate compound used to prepare the oxazolidone ring containing epoxy resins may be aromatic, aliphatic, cycloaliphatic, or mixtures thereof. The isocyanate compound may also comprise for example, a polymeric isocyanate. The isocyanate compound may be used herein as a mixture of two or more of isocyanates. The isocyanate compound may also be any mixture of the isomers of an isocyanate, for example a mixture of the 2,4- and 2,6- isomers of diphenylmethane diisocyanate (MDI) or a mixture of any 2,2'-, 2,4'- and 4,4'- isomers of toluene diisocyanate (TDI).

In one preferred embodiment, the isocyanate compound useful in this invention may comprise a diisocyanates and/or polymeric isocyanates. Diisocyanates include for example aromatic diisocyanates and aliphatic diisocyanates. Examples of aromatic diisocyanates or polymeric isocyanates useful in this invention may include, but are not limited to, 4,4'-MDI, TDI such as 2,4-toluene diisocyanate and 2,6-toluene diisocyanate, xylene diisocyanate (XDI), and isomers thereof. Examples of aliphatic diisocyanates useful in this invention may include, but are not limited to, hexamethylene diisocyanate (HMDI), isophorone diisocyanate (IPDI), 4,4'- methylenebis(cyclohexylisocyanate), trimethyl hexamethylene diisocyanate, and isomers thereof. A combination of diisocyanates may be used in this invention. A combination of polymeric isocyanates may also be used in this invention. Suitable commercially available diisocyanates and polymeric isocyanates useful in this invention may include, for example ISONATE™ M124 (ISONATE is a trademark of The Dow Chemical Company), ISONATE M125, ISONATE OP 50, PAPI™ 27 (PAPI is a trademark of The Dow Chemical Company), VORONATE™ M229 (VORONATE is a trademark of The Dow Chemical Company), VORANATE T-80 isocyanates, all available from The Dow Chemical Company; and mixtures thereof.

In one preferred embodiment, the oxazolidone ring containing epoxy resin used in this invention may be a reaction product of an aromatic epoxy resin and an isocyanate compound. Other suitable oxazolidone ring containing epoxy resins useful in this invention may include for example those disclosed in U.S. Patent No. 5,112,932; and PCT Patent Application publications WO2009/045835, WO2011/087486 and WO2011/059633.

To achieve desired balance of high tensile strength, high T_{g} and low minimum winding diameter, the amount of the oxazolidone ring containing epoxy resin useful in this invention generally may be at least about 15 wt % of the total epoxy resins in the curable epoxy resin composition in one embodiment; about 18 wt % or more in another embodiment; and about 20 wt % or more in still another embodiment. The maximum amount of the oxazolidone ring containing epoxy resin useful in this invention may be generally about 35 wt % or less of the total epoxy resins in the curable epoxy resin composition in one embodiment; about 32 wt % or less in another embodiment; and about 30 wt % or less in still another embodiment. If the amount of the oxazolidone ring containing epoxy resin is too low, the composite made thereof may not be able to provide satisfactory tensile strength. On the contrary, if the amount of the oxazolidone ring containing epoxy resin is too high, the viscosity of the curable epoxy resin composition may be too high to provide desired pultrusion processability.

The curable epoxy resin composition also comprises at least one anhydride hardener (also referred to as a hardener or cross-linking agent), or blends thereof. The anhydride hardener useful in this invention may comprise for example cycloaliphatic and/or aromatic anhydrides; and mixtures thereof. Representative anhydride hardeners useful in this invention may include, for example, phthalic acid anhydride and derivatives thereof, nadic acid anhydride and derivatives thereof, trimellitic acid anhydride and derivatives thereof, pyromellitic acid anhydride and derivatives thereof, benzophenonetetracarboxylic acid anhydride and derivatives thereof, dodecenyl succinic acid anhydride and derivatives thereof, poly (ethyloctadecanedioic acid) anhydride and derivatives thereof; and mixtures thereof. The above anhydride hardeners can be used alone or in an admixture thereof.

In one preferred embodiment, hexahydrophthalic anhydride, methyl hexahydrophthalic anhydride, tetrahydrophthalic anhydride, methyl tetrahydrophthalic anhydride, methyl-(endo)-5-norbornene-2,3-dicarboxylic anhydride, nadic acid anhydride, nardic maleic anhydride, methyl nadic acid anhydride; and mixtures thereof are particularly suitable for this invention. Anhydride hardeners may also include for example copolymers of styrene and maleic acid anhydrides; and other anhydrides including for example those described in US Patent. No. 6,613,839.

In general, the anhydride hardener useful in this invention is used in a sufficient amount to cure the curable epoxy resin composition. A molar ratio of total epoxy resins to the hardener (including the anhydride hardener and additional hardeners, if present) in the curable epoxy resin composition may be desirably a molar ratio of between about 50:1 to about 1:2 in one embodiment, between about 30:1 to about 1:2 in another embodiment, between about 20:1 to about 1:1.5 in still another embodiment, and between about 10:1 to about 1:1.25 in yet another embodiment.

Toughening agents used herein may be for example any compound useful for preventing the composites disclosed herein from becoming brittle when the curable epoxy resin composition cures. Toughening agents may include, for example, rubber compounds, block copolymers, polyols, and mixtures thereof.

Examples of toughening agents useful in this invention may include amphiphillic block copolymers, such as FORTEGRA 100 block copolymers available from The Dow Chemical Company (FORTEGRA is a trademark of The Dow Chemical Company); linear polybutadiene-polyacrylonitrile copolymers, oligomeric polysiloxanes, organopolysiloxane resins, carboxyl terminated butadiene, carboxyl terminated butadiene nitrile rubber (CTBN), polysulfide-based toughening agents, amine-terminated butadiene nitrile, polythioethers; and mixtures thereof.

Toughening agents useful in this invention may also include those described in, for example, U.S. Patent Nos. 5,262,507, 7,087,304 and 7,037,958; and U.S. Patent Application Publication Nos. 2005/0031870 and 2006/0205856. Amphiphillic toughening agents useful in this invention may include those disclosed in, for example, PCT Patent Application publications WO2006/052725, WO2006/052726, WO2006/1052727, WO2006/052729, WO2006/052730, and WO2005/1097893; U.S. Patent No. 6,887,574; and U.S. Patent Application Publication No. 2004/0247881.

In one preferred embodiment, the toughening agent comprises a polyol. In general, the polyol used in this invention may be for example any of polyols known in the art. For example, in one preferred embodiment, the polyol may be an aliphatic polyol. In one embodiment, the aliphatic polyol may be selected, for example, from linear aliphatic polyols and branched aliphatic polyols.

Generally, the polyol useful in this invention may have a nominal functionality (average number of OH groups/molecule) of about 2 or more in one embodiment, and about 3 or more in another embodiment; and at the same time, the polyol may have a nominal functionality desirably of about 10 or less in one embodiment, about 8 or less in another embodiment, and about 6 or less in still another embodiment.

In addition, the polyol may have an average hydroxyl number ranging generally from about 20 to about 10,000 milligrams potassium hydroxide per gram of polyol (mg KOH/g) in one embodiment, ranging from about 30 to about 3,000 mg KOH/g in another embodiment, ranging from about 150 to about 1,500 mg KOH/g in still another embodiment, and ranging from about 180 to about 800 mg KOH/g in yet another embodiment.

Examples of suitable polyols useful in this invention may include polyether polyols, polyester polyols, polyhydroxy-terminated acetal resins, polyalkylene carbonate-based polyols, hydroxyl-terminated amines, polyamines; and mixtures thereof. Examples of the above polyols and other suitable polyols are described more fully, for example, in U.S. Patent No. 4,394,491. In another embodiment, the polyol may also include a polymer polyol. The polyol useful in this invention can comprise any one or combination of more than one of the polyols. Suitable commercially available polyols useful in this invention may include for example VORANOL™ 280 (VORANOL is a trademark of The Dow Chemical Company), VORANOL CP 6001, VORANOL 8000LM polyols, all available from The Dow Chemical Company; and mixtures thereof.

In one preferred embodiment, the polyols useful in this invention may include at least one of polyoxalkylene polyol having an equivalent weight in a range of from about 20 to about 2,500. Such polyols may have a combined nominal functionality of from about 2 to about 10. The polyols may include for example poly(propylene oxide) homopolymers, poly(ethylene oxide) homopolymers, random copolymers of propylene oxide and ethylene oxide in which the poly(ethylene oxide) content is, for example, from 1 wt% to 50 wt%, ethylene oxide-capped poly(propylene oxide) homopolymers, ethylene oxide-capped random copolymers of propylene oxide and ethylene oxide; and mixtures thereof. In one preferred embodiment, the polyol may comprise a poly(propylene oxide) polyol.

In one preferred embodiment, the polyol useful in this invention may desirably have a number average molecular weight of generally from about 2,000 to about 20,000, from about 4,000 to about 16,000 in another embodiment, and from about 6,000 to about 15,000 in still another embodiment.

The amount of the toughening agent useful in the curable epoxy resin composition may depend on a variety of factors including the desired properties of the products made from the curable epoxy resin composition. In general, the amount of toughening agent useful in this invention may be from about 0.1 wt % to about 30 wt % in one embodiment, from about 0.5 wt % to about 10 wt % in another embodiment, and from about 1 wt % to about 5 wt % in still another embodiment, based on the total weight of the curable epoxy resin composition.

The curable epoxy resin composition may optionally comprise a catalyst. The catalyst may be used to promote the reaction between the epoxy resins and the anhydride hardener. Catalysts useful in this invention may include for example a Lewis acid, such as for example boron trifluoride, or in another embodiment, a derivative of boron trifluoride with an amine such as piperidine or methyl ethylamine. The catalysts may also be basic such as, for example, an imidazole or an amine. Other catalysts useful in this invention may include for example other metal halide Lewis acids, including stannic chloride, zinc chloride, and mixtures thereof; metal carboxylate-salts such as stannous octoate; amines including tertiary amines such as triethylamine, diethyl aminopropylamine, benzyl dimethy amine, tris(dimethylaminomethyl)phenol and mixtures thereof; imidazole derivatives such as 2-methylimidazole, 1- methylimidazole, benzimidazole and mixtures thereof; and onium compounds such as ethyltriphenyl phosphonium acetate, and ethyltriphenyl phosphonium acetate-acetic acid complex; and any combination thereof. Any of the well-known catalysts described in U.S. Patent. No. 4,925,901 may also be used in this invention.

The catalysts, when present in the curable epoxy resin composition, are employed in a sufficient amount to result in a substantially complete cure of the curable epoxy resin composition, with at least some cross-linking. For example, the catalyst, when used, may be used in an amount of from about 0.01 to about 5 parts per hundred parts (phr) by weight of total epoxy resins in the curable epoxy resin composition in one embodiment; from about 0.1 to about 4.0 phr in another embodiment; and from about 0.2 phr to about 3 phr in still another embodiment.

The curable epoxy resin composition may optionally comprise an additional epoxy resin. The additional epoxy resin (or "second epoxy") useful in this invention may be any type of epoxy resins, including any material containing one or more reactive oxirane groups, referred to herein as "epoxy groups" or "epoxy functionality". The additional epoxy resin may include for example mono-functional epoxy resins, multi- or poly-functional epoxy resins, and combinations thereof. The additional epoxy resins may be pure compounds, but are generally mixtures or compounds containing one, two or more epoxy groups per molecule. The additional epoxy resin may also be for example monomeric or polymeric. In some embodiments, the additional epoxy resins may also include for example reactive ---OH groups, which may react at higher temperatures with anhydrides, organic acids, amino resins, phenolic resins, or with epoxy groups (when catalyzed) to result in additional crosslinking. Other suitable epoxy resins useful in this invention are disclosed in, for example, U.S. Patent. Nos. 7,163,973, 6,887,574, 6,632,893, 6,242,083, 7,037,958, 6,572,971, 6,153,719, and 5,405,688; PCT Publication WO2006/052727; and U.S. Patent Application Publication Nos. 2006/0293172 and 2005/0171237.

Examples of the additional epoxy resins useful in this invention may include epoxy phenolic novolac resins and cresol novolac type epoxy resins, multifunctional (polyepoxy) epoxy resins, bisphenol A-based epoxy resins, bisphenol F-based epoxy resins, and mixtures thereof.

Epoxy phenolic novolac resins optionally used in this invention may include condensates of phenols with formaldehyde that may be obtained under acid conditions, such as phenol novolacs, bisphenol A novolacs, and cresol novolacs, such as those available under the tradenames D.E.N. 431 and D.E.N. 438 available from The Dow Chemical Company, and EPONSU-8, available from Hexion Specialty Chemicals.

Suitable multi-functional (polyepoxy) epoxy resins optionally used in this invention may include resorcinol diglycidyl ether (1,3-bis-(2,3-epoxypropoxy) benzene), triglycidyl p-aminophenol (4-(2,3-epoxypropoxy)-N,N -bis(2,3-epoxypropyl)aniline), triglycidylether of meta- and/or para-aminophenol (such as 3-(2,3-epoxypropoxy)-N,N-bis(2,3-epoxypropyl)aniline), tetraglycidyl methylene dianiline (N,N,N',N'-tetra(2,3-epoxypropyl) 4,4'-diaminodiphenyl methane), and mixtures of two or more of the above polyepoxy compounds. A more exhaustive list of epoxy resins useful in this invention may be found in Lee, H. and Neville, K., Handbook of Epoxy Resins, McGraw-Hill Book Company, 1982 reissue.

Other suitable additional epoxy resins optionally used in this invention include polyepoxy compounds based on aromatic amines and epichlorohydrin, such as N,N'-diglycidyl-aniline; N,N'-dimethyl-N,N'-diglycidyl-4,4'-diaminodiphenylmethane; N,N,N',N'-tetraglycidyl-4,4'diaminodiphenylmethane; N-diglycidyl-4-aminophenyl glycidyl ether; N,N,N',N'-tetraglycidyl-1,3-propylene bis-4-aminobenzoate; and mixtures thereof. Additional epoxy resins may also include glycidyl derivatives of one or more of: aromatic diamines, aromatic monoprimary amines, aminophenols, polyhydric phenols, polyhydric alcohols, polycarboxylic acids; and mixtures thereof.

Other suitable additional epoxy resins that may be optionally used in this invention include for example 4,4'-dihydroxydiphenyl dimethyl methane (or bisphenol A), bis(4-hydroxyphenyl) methane (known as bisphenol F), diglycidyl ether of bromobisphenol A (2,2-bis(4-(2,3-epoxypropoxy)-3-bromophenyl) propane), diglycidyl ether of Bisphenol F (2,2-bis(p-(2,3 -epoxypropoxy)phenyl)methane), other epoxy resins based on bisphenol A and bisphenol F; and mixtures thereof. Bisphenol-A based epoxy resins may include, for example, diglycidyl ethers of bisphenol A; and D.E.R. 332, D.E.R. 383, and D.E.R. 331 available from The Dow Chemical Company; and mixtures thereof. Bisphenol-F based epoxy resins may include, for example, diglycidylethers of bisphenol-F, and D.E.R. 354 and D.E.R.354LY, each available from The Dow Chemical Company; and mixtures thereof.

Generally, the additional epoxy resin, if present, may be used in an amount that does not compromise or deleteriously affect the properties of the composite made thereof. For example, the amount of the additional epoxy resin used herein may be generally about 30 wt % or less of the total epoxy resins in the curable epoxy resin composition in one embodiment, and less than about 20 wt % of the total epoxy resins in the curable epoxy resin composition in another embodiment. If the amount of the additional epoxy resins is higher than about 30 wt %, the tensile strength and the T_{g} of the composite made from the curable epoxy resin composition may significantly decrease.

In addition to the anhydride hardeners described above, the curable epoxy resin composition may optionally comprise additional hardeners (or curing agents) for promoting crosslinking of the curable epoxy resin composition. The additional hardener (or "second hardener") useful in this invention may be used individually or as a mixture of two or more hardeners. The additional hardener may include for example any compound having an active group being reactive with the epoxy group of the epoxy resins.

The additional hardeners useful in this invention may include for example nitrogen-containing compounds such as amines and their derivatives; oxygen-containing compounds such as carboxylic acid terminated polyesters, phenol novolacs, bisphenol-A novolacs, DCPD-phenol condensation products, brominated phenolic oligomers, amino-formaldehyde condensation products, phenol, and bisphenol A and cresol novolacs; phenolic-terminated epoxy resins; sulfur-containing compounds such as polysulfides, and polymercaptans; and mixtures thereof.

Examples of additional hardeners useful in the invention may include any catalytic curing materials known to be useful for curing epoxy resin compositions. Suitable catalytic curing agents include for example tertiary amine, quaternary ammonium halide, Lewis acids such as boron trifluoride, and any combination thereof.

The curable epoxy resin compositions for forming the thermoset resin may optionally further contain one or more other additives. For example, the optional additives may include stabilizers, surfactants, flow modifiers, pigments or dyes, matting agents, degassing agents, fillers, flame retardants (for example, inorganic flame retardants such as aluminum trihydroxide, magnesium hydroxide, boehmite, halogenated flame retardants, and non-halogenated flame retardants such as phosphorus-containing materials), curing initiators, curing inhibitors, wetting agents, colorants or pigments, thermoplastics, processing aids, ultraviolet (UV) blocking compounds, fluorescent compounds, UV stabilizers, antioxidants, impact modifiers including thermoplastic particles, mold release agents and mixtures thereof. In one preferred embodiment, fillers, mold release agents, wetting agents and their combinations may be used in this invention.

In one preferred embodiment, the curable epoxy resin composition may comprise fillers. Examples of suitable fillers useful in this invention can be selected from any inorganic filler in one embodiment, and in another embodiment from silica, talc, quartz, mica, zinc peroxide, titanium dioxide, aluminum silicate and mixtures thereof.

If present, the concentration of the inorganic filler may be desirably chosen from between 0 wt % to about 30 wt % in one embodiment, between about 0.01 wt % to about 20 wt % in another embodiment, between about 0.1 wt % to about 10 wt % in still another embodiment, based on the total weight of the curable epoxy resin composition. In one preferred embodiment, at least one average dimension of the inorganic filler particles may be below about 10 microns, below about 1 micron in another embodiment, and below about 0.5 micron in still another embodiment.

In general, the amount of the optional additives (if present) in the curable epoxy resin composition should not compromise processability of the curable epoxy resin composition.

The preparation of the curable epoxy resin composition of this invention is achieved by admixing (a) from 60 to 85 weight percent of a cycloaliphatic epoxy resin, (b) from 15 to 40 weight percent of an oxazolidone ring containing epoxy resin, (c) at least one anhydride hardener, and (d) at least one toughening agent. Other optional components including for example a catalyst, an additional epoxy resin, an additional hardener or other optional additives may also be added, as described above. Components of the curable epoxy resin composition of this invention may be admixed in any order to provide the curable epoxy resin composition of this invention. Any of the above-mentioned optional components, for example fillers, may also be added to the composition during the mixing or prior to the mixing to form the composition.

To provide satisfactory pultrusion processability, the curable epoxy resin composition in this invention has a viscosity of generally less than about 3,000 mPa.s (ASTM D-2983 at 25°C) in one embodiment, less than about 2,500 mPa.s in another embodiment, less than about 2,000 mPa.s in still another embodiment, less than about 1,750 mPa.s in yet another embodiment, and less than about 1,000 mPa.s in even still another embodiment.

The reinforcing fiber herein may be selected from synthetic or natural fibers. The reinforcing fiber may include one or more fibers such as carbon fibers, graphite fibers, boron fibers, quartz fibers, aluminum oxide-containing fibers, glass fibers, cellulose fibers, silicon carbide fibers or silicon carbide fibers containing titanium, and mixtures thereof. Suitable commercially available fibers useful in this invention may include for example organic fibers such as KEVLAR™ from DuPont (KEVLAR is a trademark of DuPont); aluminum oxide-containing fibers, such as NEXTEL™ fibers from 3M (NEXTEL is a trademark of 3M Company); silicon carbide fibers, such as NICALON™ fibers from Nippon Carbon (NICALON is a trademark of Nippon Carbon Company Ltd.); carbon fibers, such as TORAYCA™ fibers from Toray Industries (TORAYCA is a trademark of Toray Industries); glass fiber, such as ADVANTEX™ fiber from Owens Corning (ADVANTEX is a trademark of Owens Corning); and silicon carbide fibers containing titanium; or a combination of glass and carbon fibers; and mixtures thereof.

The composite of this invention may comprise one single type of reinforcing fiber or combination of two or more different type of reinforcing fibers. In general, examples of the reinforcing fibers useful in this invention may include carbon fibers, glass fibers or fibers comprising carbon in combination with other materials such as glass. In one preferred embodiment, the reinforcing fibers used in the composite may comprise a combination of a carbon fiber and a glass fiber.

In one preferred embodiment, the continuous reinforcing fiber useful in this invention may comprise for example a carbon fiber. Carbon fibers generally are supplied in a number of different forms, for example, continuous filament tows, and mats. The fibers can be unidirectional or multidirectional. The tows of continuous filament carbon generally contain from about 1,000 to about 75,000 individual filaments, which can be woven or knitted into woven roving and hybrid fabrics with glass fibers and aramid fibers. Carbon fibers used herein may be selected for example from carbon fibers having a tensile strength of at least 2,000 MPa or more in one embodiment; having a tensile strength within the range of about 3,500 MPa to about 9,000 MPa in another embodiment; and having a tensile strength within the range between about 5,000 MPa to about 7,000 MPa in still another embodiment.

In one preferred embodiment, the continuous reinforcing fiber useful in this invention may comprise for example a glass fiber. Examples of different types of glass fibers include for example E glass, S glass, S-2 glass or C glass, boron free E glass, E-CR glass, and combination thereof. Glass fibers used herein can be selected for example glass fibers having a tensile strength of at least 1,200 MPa or more in one embodiment; and having a tensile strength within the range of about 1,500 MPa to about 6,000 MPa in another embodiment.

The reinforcing fibers useful for the composite of the present invention may be in the forms of, for example, woven fabric, cloth, mesh, web, fiber tows; or in the form of a cross-ply laminate of unidirectionally oriented parallel filaments.

The continuous reinforcing fiber may be preformed into specific microstructures, for example, consisting of axial fibers aligned in the longitudinal direction of the composite as well as twisted fibers braided around the axial fibers with certain helix angle. In one preferred embodiment, the continuous reinforcing fibers substantially are axial fibers aligned in the longitudinal direction of the composite.

The composite of this invention desirably comprises from about 10 to about 90 volume-percent reinforcing fibers in one embodiment, from about 50 to about 80 volume-percent reinforcing fibers in another embodiment, and from about 60 to about 75 volume-percent reinforcing fibers in still another embodiment, based on total composite volume.

Composites of this invention may be formed for example by curing the curable epoxy resin composition with a continuous reinforcing fiber as described above to form a thermoset resin and a continuous reinforcing fiber embedded within the thermoset resin matrix.

A processing technique useful in this invention may include for example a pultrusion process. In one preferred embodiment, the process for preparing the composite comprises the steps of: pulling a continuous reinforcing fiber, contacting the reinforcing fiber with the curable epoxy resin composition, and curing the curable epoxy resin composition while being in contact with the continuous reinforcing fiber.

In another preferred embodiment, the process for preparing the composite may include for example the steps of: pulling the reinforcing fiber through a curable epoxy resin composition impregnation zone to contact or coat the reinforcing fiber with the curable epoxy resin composition of this invention to form resin-impregnated fibers; and then pulling the resin-impregnated fibers through a heated die to cure the curable epoxy resin composition. Optionally, the reinforcing fiber may be pulled through a pre-form plate to shape the fiber/epoxy bundle before reaching the heated die. In one embodiment, the impregnation zone used herein may be at temperatures in a range from about 25°C to about 70°C, and in another embodiment from about 30°C to about 60°C. The type of the impregnation zone used herein may vary as long as the zone provides a satisfactory fiber wetting out. In one embodiment, the impregnation zone may be a bath or a tank of the curable epoxy resin composition wherein the fibers pass therethrough to wet the fibers with composition. In another embodiment, the reinforcing fibers may be contacted with the curable epoxy resin composition in a closed die (for example, an injection die). Alternatively, in still another embodiment, the curable epoxy resin composition can be applied to the reinforcing fiber as a high-pressure spray, for example as described in U.S. Patent Application No. US2011/0104364. In one preferred embodiment, each individual fiber in the mass of reinforcing fibers is coated with the curable epoxy resin composition.

In one embodiment, two or more different types of reinforcing fibers may be used during pultrusion. In one preferred embodiment, the process of this invention may comprise for example the following steps: a first plurality of fibers (for example, in a form of fiber tows) is pulled through an impregnation zone and form resin-impregnated fibers, then the resin-impregnated fibers are pulled through a first heated die at a temperature sufficient to form a tacky state of a first plurality of resin-impregnated fibers. The tacky state of the first plurality of resin-impregnated fibers is then pulled toward a second heated die. Substantially simultaneously, a second plurality of fibers is separately pulled through the impregnation zone and directly toward the second heated die. At the entrance of the second heated die, the resultant wet second plurality of resin-impregnated fibers forms a plurality of consecutive bushings to compress and configure around the outer surface of the tacky first plurality of resin-impregnated fibers. Then the tacky first plurality of impregnated fibers surrounded by the wet second plurality of impregnated fibers is cured together. In one preferred embodiment, the first plurality of fibers is carbon fibers; and the second plurality of fibers is glass fibers.

Curing the curable epoxy resin composition may be carried out, for example, at a temperature of at least about 30 °C up to about 250 °C, for predetermined periods of time which may be from minutes up to hours, depending on the curable epoxy resin composition, hardener, and catalyst, if used. In other embodiments, curing of the composition may occur at a temperature of at least about 100 °C, for predetermined periods of time of from minutes up to hours. Optionally, post-treatments may also be used herein, and such post-treatments may be carried out at temperatures between about 100 °C and 250 °C.

In one preferred embodiment, curing the curable epoxy resin composition may be staged to prevent exotherms. Staging, for example, includes curing for a period of time at a temperature followed by curing for a period of time at a higher temperature. Staged curing may include two, three or more curing stages, and may commence at temperatures below about 180° C, in some embodiments, and below about 150° C in other embodiments. In one preferred embodiment, a three-stage curing of the curable epoxy resin composition is used.

In some embodiments, curing of the curable epoxy resin composition of the present invention may be carried out for example at temperatures in a range from about 30 °C to about 250 °C in one embodiment, from about 60 °C to about 240 °C in another embodiment, from about 100 °C to about 230 °C in still another embodiment, and from about 120 °C to about 220 °C in yet another embodiment.

The pulling speed of the pultrusion process used in this invention may be chosen for example to allow the reinforcing fiber to sufficiently wet out and/or to ensure the curable epoxy resin composition fully cures. The pulling speed may be for example desirably about 300 mm per minute (mm/min) in one embodiment, about 400 mm/min or higher in another embodiment, about 500 mm/min or higher in still another embodiment, and about 700 mm/min or higher in yet another embodiment.

Generally, the composite of this invention may include for example a plurality of reinforcing fibers embedded in a thermoset resin. In one preferred embodiment, the composite of this invention comprises for example fiber tows embedded in a thermoset resin matrix.

The composite of this invention defines a longitudinal axis, which defines a center of the composite. The reinforcing fibers in the composite may include fibers axially aligned in the longitudinal direction of the composite (that is axial fibers), or combination of axial fibers and twisted fibers braided around the axial fibers with certain helix angle. In one preferred embodiment, the reinforcing fibers are axially aligned in the longitudinal direction of the composite. In another preferred embodiment, individual fibers in the reinforcing fibers are unidirectionally oriented and axially aligned in the longitudinal direction of the composite. In one preferred embodiment, the composite has a constant cross-sectional area over its entire length.

The composite of this invention may have different structures and/or different shapes depending on the applications in which the composite is used. In one preferred embodiment, the composite may be for example a rod, which may be suitable for applications such as cable cores. In another preferred embodiment, for example the composite may comprises an inner core and an outer sheath, wherein the diameter of the composite is the diameter of the inner core plus the thickness of the outer sheath. Generally, the inner core is surrounded by the outer sheath. In one preferred embodiment, the inner core may comprise a carbon fiber embedded in the thermoset resin; and the outer sheath may comprise a glass fiber embedded in the thermoset resin. In one preferred embodiment, the carbon fiber in the inner core is axially aligned to the longitudinal direction of the composite; and the glass fiber in the outer sheath may be wound around the inner core axially aligned to the longitudinal direction of the composite; wound around the inner core at any angle not parallel to the longitudinal axis of the composite, or a combination thereof. In one embodiment, the glass fiber in the outer sheath is axially aligned to the longitudinal axis of the composite.

The volume ratio of the thermoset resin to the carbon fiber in the inner core may generally be desirably from about 10/90 to about 50/50 in one embodiment, from about 20/80 to about 40/60 in another embodiment, and from about 25/75 to about 35/65 in still another embodiment. The volume ratio of the thermoset resin to the glass fiber in the outer sheath may be generally from about 10/90 to about 50/50 in one embodiment, from about 20/80 to about 40/60 in another embodiment, and from about 25/75 to about 35/65 in still another embodiment.

The composite of this invention advantageously has (i) a tensile strength of at least about 2,400 MPa or more in one embodiment, about 2,420 MPa or more in another embodiment, about 2,450 MPa or more in still another embodiment and about 2,500 or more in yet another embodiment; (ii) a minimum winding radius of about 55D or less in one embodiment, about 50D or less in another embodiment, about 45D or less in still another embodiment and about 40D or less in yet another embodiment; and (iii) a T_{g} of at least about 160 °C or higher in one embodiment, about 170°C or higher in another embodiment, about 180°C or higher in still another embodiment, and about 190°C or higher in yet another embodiment.

The composite of this invention may be useful in many applications, such as composite cords for suspension bridges, composite cords for overhead cableway or composite cores for cables.

A "cable" herein includes any cables suitable for electrical transmission and distribution, for example overhead electrical transmission. The cable of this invention comprises the composite of this invention as a core, and a metal conductor (for example, aluminum conductor) surrounding the outer surface of the core. There may be one or more additional protective layers disposed between the core and the metal conductor. The protective layer or layers, when used, may be used for example to prevent the core from potential loss of properties during usage; and/or to increase the weathering resistance or the corrosion resistance of the core. In addition, the protective layer or layers may be used, for example, to reduce a potential galvanic reaction between the core and the metal conductor. The additional protective layer or layers may comprise, for example, thermoplastics, fiber-reinforced thermoplastics (that is, discontinuous and/or continuous fibers embedded in a thermoplastic resin), or fiber-reinforced thermosetting resin (for examples, epoxy resins).

### EXAMPLES

The following examples illustrate embodiments of the present invention. All parts and percentages are by weight unless otherwise indicated.
ERL™ 4221 resin (ERL is a trademark of The Dow Chemical Company) is a cycloaliphatic epoxy resin mixture, having about 85 weight percent 7-oxabicyclo [4.1.0] heptane-3-carboxylic acid and 7-oxabicyclo [4.1.0]hept-3-ylmethylester, the remainder being about 10 weight percent soluble oligomer, and 5 weight percent monoepoxides of 3-cyclohexenylmethyl-3-cyclohexene carboxylate and 3-cyclohexen-1-ylmethyl ester, commercially available from The Dow Chemical Company.
D.E.R.™ 383 resin (D.E.R is a trademark of The Dow Chemical Company) is a bisphenol-A diglycidyl ether having an epoxide equivalent weight (EEW) of 181 and commercially available from The Dow Chemical Company.
D.E.N.™ 438 resin (D.E.N is a trademark of The Dow Chemical Company) is an epoxy novolac resin (a semi-solid reaction product of epichlorohydrin and phenol-formaldehyde novolac) available from The Dow Chemical Company.
D.E.R. 858 resin is a polymer of Bisphenol A, epichlorohydrin and methylenediphenylene (which is an oxazolidone ring containing epoxy resin), commercially available from The Dow Chemical Company.
Nardic maleic anhydride is available from Polynt.
VORANOL™ 8000LM polyol (VORANOL is a trademark of The Dow Chemical Company) is a polypropylene glycol, with a molecular weight of 8000 Dalton and a real functionality close to 2, available from The Dow Chemical Company.
1-Methylimidazole is a catalyst available from BASF.
MOLDWIZ™ INT-1890M mold release agent is available from Axel (MOLDWIZ is a trademark of Axel Plastics Research Laboratories, Inc.).
T-700SC carbon fiber is a typical carbon fiber with standard modulus and high strength available from Toray Industries.
ADVANTEX™E366 glass fiber is a boron free E-CR glass fiber available from Owens Corning (ADVANTEX is a trademark of Owens Corning).

The following standard analytical equipments and methods are used in the Examples.

### Viscosity

Viscosity was measured in accordance with ASTM D-2983 at 25 □.

### Glass Transition Temperature

Glass transition temperature (T_{g}) was measured by dynamic mechanical analysis (DMA), in accordance with ASTM D7028 - 07e1.

### Tensile strength

Tensile strength was measured in accordance with ASTM D3039-08 test (sample length: 1 meter, test speed: 5 millimeter per minute (mm/min), gauge length: 50 centimeter).

### Minimum winding diameter

Minimum winding diameter was measured on a piece of composite with a length of more than 200 times of composite diameter (D). The composite was wound around a series of cylinders at a speed of 2D per minute for 720°, respectively; then loosed from the cylinder. Then, the surface of the composite was observed and the tensile strength of the composite was measured, which need to meet the requirements as follows:
(1) no visible damages (cracks or wrinkles) on the surface of the composite, and
(2) no obvious decrease of tensile strength of the composite (that is, the tensile strength of the composite after winding decreases less than 10% compared to original tensile strength of the composite before winding).

The minimum diameter (D_{c}) about which the composite can meet the above two requirements is recorded. The minimum winding diameter (D_{w}) is represented by nD, where n value is D_{c} divided by D. For example, if the n value is 40, the minimum winding diameter of the composite is 40D.

### Examples 1-3 and Comparative Examples A-C

Fiber-reinforced composites are prepared by a pultrusion line. Epoxy resin compositions are firstly prepared by mixing ingredients indicated by Table 1, then added into a wet out tank. Spools of both glass and carbon fiber tows in a rack system are provided with the ends of the individual fiber tows being threaded through a fiber tow guide, respectively. The fiber tows undergo tangential pulling through the guide to prevent twisting. After passing through the guide, the fiber tows are pulled through an oven to evacuate moisture. The dried fiber tows are pulled into the wet out tank filled with the epoxy resin composition. The fibers are impregnated with the epoxy resin composition in the tank and excess epoxy resin composition is removed from the fiber tows at the exit of the tank. The resin-impregnated carbon fiber tows are pulled through a first heated die at 60-120°C, resulting in a tacky state of carbon fiber tows that pulled further toward a second heated die. The resin-impregnated glass fibers are maintained separately from the carbon fiber tows by the fiber guide and are pulled directly toward the second heated die. At the entrance of the second heated die, the glass fiber tows are guided to form a plurality of consecutive bushings to compress and configure around the tacky carbon fiber tows. The tacky carbon fiber tows surrounded by the wet glass fibers are cured completely together in the second heated die. The second heated die is a three-zone heated die with a die diameter of 8.25 mm. Each heating zone has a length of 300 mm. The temperatures for the three zones are 175 °C, 195 °C, 205 °C, respectively. Fiber tows were pulled parallel to the longitudinal axis direction of the dies at a pulling speed of 300 mm/min.

The composite obtained is a rod with a structure having an inner core surrounded by an outer sheath, where the carbon fiber embedded in the thermoset epoxy matrix as the inner core and the glass fiber embedded in the thermoset epoxy matrix as the outer sheath. The inner core has a diameter of 6.35 mm and the outer sheath has a thickness of 1.75 mm. Thus, the diameter of the composite (D) is 8.1 mm. The weight ratio of the carbon fibers to the thermoset epoxy resin in the inner core is 70/30. The weight ratio of the glass fibers to the thermoset epoxy resin in the outer sheath is 65/35. Properties of the composites are given in Table 2.

**Table 1**

| | Epoxy resin composition Parts by Weight (pbw) | | | | | |
|---|---|---|---|---|---|---|
| | Example 1 | Example 2 | Example 3 | Comparative Example A | Comparative Example B | Comparative Example C |
| ERL 4221 | 85 | 70 | 80 | 85 | 70 | 90 |
| D.E.R. 383 | 0 | 0 | 0 | 7.5 | 15 | 0 |
| D.E.N. 438 | 0 | 0 | 0 | 7.5 | 15 | 0 |
| D.E.R. 858 | 15 | 30 | 20 | 0 | 0 | 10 |
| Nardic maleic anhydride | 110.7 | 98.4 | 106.6 | 118.9 | 114.8 | 114.8 |
| VORANOL 8000LM | 20.3 | 18 | 19.5 | 21.8 | 21 | 21 |
| 1-Methylimidazole | 4.1 | 3.6 | 3.9 | 4.4 | 4.2 | 4.2 |
| INT-1890M | 2.0 | 2.0 | 2.0 | 2.0 | 2.0 | 2.0 |
| Viscosity (mPa·s) | 1400-1600 | 1700-1900 | 1400-1600 | 800-1000 | 1000-1200 | 900-1100 |

As shown in Table 2, all composites of this invention (Examples 1-3) provide a tensile strength of at least 2,400 MPa, a minimum winding diameter of 40D (D is the diameter of the composite) and T_{g} higher than 160°C. In contrast, the composites of Comparative Examples A-B, based on cycloaliphatic epoxy resin blending with other conventional bisphenol-A based epoxy resin and novolac epoxy resin, only afford tensile strength much lower than 2,400MPa. In addition, the epoxy resin composition of Comparative Example C contains 90 wt % of the cycloaliphatic epoxy resin and 10 wt % of the oxazolidone ring containing epoxy resin, based on total epoxy resins in the epoxy resin composition. The composite core of Comparative Example C sill cannot meet the requirement of tensile strength.

**Table 2**

| Properties | Example 1 | Example 2 | Example 3 | Comparative Example A | Comparative Example B | Comparative Example C |
|---|---|---|---|---|---|---|
| Tensile strength (MPa) | 2450 | 2420 | 2550 | 2215 | 2210 | 2340 |
| Minimum winding diameter (mm) | 40D | 40D | 40D | 40D | 40D | 40D |
| T_{g} (°C) | 199 | 179 | 197 | 208 | 206 | 201 |

## Claims

1. A curable epoxy resin composition comprising (a) from 60 to 85 weight percent of a cycloaliphatic epoxy resin, (b) from 15 to 40 weight percent of an oxazolidone ring containing epoxy resin, (c) at least one anhydride hardener, and (d) at least one toughening agent, where weight percent values are relative to total weight of epoxy resins in the curable epoxy resin composition.

2. The composition of Claim 1, wherein the curable epoxy resin composition comprises from 20 to 30 weight percent of the oxazolidone ring containing epoxy resin.

3. The composition of Claim 1, wherein the oxazolidone ring containing epoxy resin is a reaction product of an aromatic epoxy resin and an isocyanate compound.

4. The composition of Claim 1, wherein the toughening agent is a polyol.

5. The composition of Claim 1, wherein the curable epoxy resin composition comprising at least one of a mold release agent, a catalyst or a filler.

6. A process for preparing the curable epoxy resin composition of any of claims 1-5, comprising admixing (a) from 60 to 85 weight percent of a cycloaliphatic epoxy resin, (b) from 15 to 40 weight percent of an oxazolidone ring containing epoxy resin, (c) at least one anhydride hardener, and (d) at least one toughening agent, where weight percent values are relative to total weight of epoxy resins in the curable epoxy resin composition.

7. A composite comprising a continuous reinforcing fiber embedded in a thermoset resin, wherein the thermoset resin is a reaction product of the curable epoxy resin composition of any of claims 1-5.

8. The composite of Claim 7, wherein the reinforcing fiber is selected from the group consisting of a carbon fiber and a glass fiber.

9. The composite of Claim 8, wherein the reinforcing fiber is the carbon fiber.

10. The composite of Claim 7, wherein the reinforcing fiber comprises from 10 to 90 volume percent of the total composite volume.

11. The composite of Claim 7, wherein the reinforcing fiber is axially aligned in the longitudinal direction of the composite.

12. The composite of Claim 7 comprising an inner core and an outer sheath, wherein the inner core comprises a carbon fiber embedded in the thermoset resin, the outer sheath comprises a glass fiber embedded in the thermoset resin, and the inner core is surrounded by the outer sheath.

13. The composite of Claim 12, wherein the carbon fiber is axially aligned in the longitudinal direction of the composite.

14. A process for preparing the composite of any of claims 7-13, comprising pulling a continuous reinforcing fiber, contacting the reinforcing fiber with the curable epoxy resin composition, and curing the curable epoxy resin composition.

15. A cable comprising a core surrounded by metal conductor, wherein the core comprises the composite of any of claims 7-13.

## Patentansprüche

1. Eine härtbare Epoxidharzzusammensetzung, die (a) von 60 bis 85 Gewichtsprozent eines cycloaliphatischen Epoxidharzes, (b) von 15 bis 40 Gewichtsprozent eines Oxazolidonrings, der Epoxidharz enthält, (c) mindestens einen Anhydridhärter und (d) mindestens einen Elastifikator beinhaltet, wobei die Gewichtsprozentwerte relativ zu dem Gesamtgewicht der Epoxidharze in der härtbaren Epoxidharzzusammensetzung sind.

2. Zusammensetzung gemäß Anspruch 1, wobei die härtbare Epoxidharzzusammensetzung von 20 bis 30 Gewichtsprozent des Oxazolidonrings, der Epoxidharz enthält, beinhaltet.

3. Zusammensetzung gemäß Anspruch 1, wobei der Oxazolidonring, der Epoxidharz enthält, ein Reaktionsprodukt eines aromatischen Epoxidharzes und einer Isocyanatverbindung ist.

4. Zusammensetzung gemäß Anspruch 1, wobei der Elastifikator ein Polyol ist.

5. Zusammensetzung gemäß Anspruch 1, wobei die härtbare Epoxidharzzusammensetzung mindestens eines von einem Formtrennmittel, einem Katalysator oder einem Füllmaterial beinhaltet.

6. Ein Verfahren zum Erstellen der härtbaren Epoxidharzzusammensetzung gemäß einem der Ansprüche 1-5, das das Vermischen von (a) von 60 bis 85 Gewichtsprozent eines cycloaliphatischen Epoxidharzes, (b) von 15 bis 40 Gewichtsprozent eines Oxazolidonrings, der Epoxidharz enthält, (c) mindestens eines Anhydridhärters und (d) mindestens eines Elastifikators beinhaltet, wobei die Gewichtsprozentwerte relativ zu dem Gesamtgewicht der Epoxidharze in der härtbaren Epoxidharzzusammensetzung sind.

7. Ein Verbundstoff, der einen durchgehenden Verstärkerfüllstoff, eingebettet in ein Duroplastharz, beinhaltet, wobei das Duroplastharz ein Reaktionsprodukt der härtbaren Epoxidharzzusammensetzung gemäß einem der Ansprüche 1-5 ist.

8. Verbundstoff gemäß Anspruch 7, wobei der Verstärkerfüllstoff aus der Gruppe ausgewählt ist, die aus einer Kohlenstoff-Faser und einer Glasfaser besteht.

9. Verbundstoff gemäß Anspruch 8, wobei der Verstärkerfüllstoff die Kohlenstoff-Faser ist.

10. Verbundstoff gemäß Anspruch 7, wobei der Verstärkerfüllstoff von 10 bis 90 Volumenprozent des Gesamtverbundstoffvolumens beinhaltet.

11. Verbundstoff gemäß Anspruch 7, wobei der Verstärkerfüllstoff in der Längsrichtung des Verbundstoffs axial ausgerichtet ist.

12. Verbundstoff gemäß Anspruch 7, der einen inneren Kern und eine äußere Hülle beinhaltet, wobei der innere Kern eine Kohlenstoff-Faser beinhaltet, die in dem Duroplastharz eingebettet ist, die äußere Hülle eine Glasfaser beinhaltet, die in dem Duroplastharz eingebettet ist, und der innere Kern durch die äußere Hülle umschlossen ist.

13. Verbundstoff gemäß Anspruch 12, wobei die Kohlenstoff-Faser in der Längsrichtung des Verbundstoffs axial ausgerichtet ist.

14. Ein Verfahren zum Erstellen des Verbundstoffs gemäß einem der Ansprüche 7-13, das das Ziehen eines durchgehenden Verstärkerfüllstoffs, das In-Kontakt-Bringen des Verstärkerfüllstoffs mit der härtbaren Epoxidharzzusammensetzung und das Härten der härtbaren Epoxidharzzusammensetzung beinhaltet.

15. Ein Kabel, das einen Kern beinhaltet, der durch einen Metalleiter umschlossen wird, wobei der Kern den Verbundstoff gemäß einem der Ansprüche 7-13 beinhaltet.

## Revendications

1. Une composition de résine époxy durcissable comprenant (a) de 60 à 85 pour cent en poids d'une résine époxy cycloaliphatique, (b) de 15 à 40 pour cent en poids d'une résine époxy contenant un cycle oxazolidone, (c) au moins un durcisseur anhydride, et (d) au moins un épaississant, où les valeurs en pourcentage en poids sont relatives au poids total des résines époxy dans la composition de résine époxy durcissable.

2. La composition de la revendication 1, la composition de résine époxy durcissable comprenant de 20 à 30 pour cent en poids de la résine époxy contenant un anneau oxazolidone.

3. La composition de la revendication 1, dans laquelle la résine époxy contenant un anneau oxazolidone est un produit réactionnel d'une résine époxy aromatique et d'un composé isocyanate.

4. La composition de la revendication 1, dans laquelle l'épaississant est un polyol.

5. La composition de la revendication 1, la composition de résine époxy durcissable comprenant au moins un élément parmi un agent de démoulage, un catalyseur ou une charge.

6. Un procédé pour préparer la composition de résine époxy durcissable de n'importe lesquelles des revendications 1 à 5, comprenant le fait de mélanger ensemble (a) de 60 à 85 pour cent en poids d'une résine époxy cycloaliphatique, (b) de 15 à 40 pour cent en poids d'une résine époxy contenant un cycle oxazolidone, (c) au moins un durcisseur anhydride, et (d) au moins un épaississant, où les valeurs en pourcentage en poids sont relatives au poids total des résines époxy dans la composition de résine époxy durcissable.

7. Un composite comprenant une fibre de renfort en continu intégrée dans une résine thermodurcissable, la résine thermodurcissable étant un produit réactionnel de la composition de résine époxy durcissable de n'importe lesquelles des revendications 1 à 5.

8. Le composite de la revendication 7, dans lequel la fibre de renfort est sélectionnée dans le groupe constitué d'une fibre de carbone et d'une fibre de verre.

9. Le composite de la revendication 8, dans lequel la fibre de renfort est la fibre de carbone.

10. Le composite de la revendication 7, dans lequel la fibre de renfort comprend de 10 à 90 pour cent en volume du volume de composite total.

11. Le composite de la revendication 7, dans lequel la fibre de renfort est axialement alignée dans la direction longitudinale du composite.

12. Le composite de la revendication 7 comprenant un noyau interne et une enveloppe externe, le noyau interne comprenant une fibre de carbone intégrée dans la résine thermodurcissable, l'enveloppe externe comprenant une fibre de verre intégrée dans la résine thermodurcissable, et le noyau interne étant entouré par l'enveloppe externe.

13. Le composite de la revendication 12, dans lequel la fibre de carbone est axialement alignée dans la direction longitudinale du composite.

14. Un procédé pour préparer le composite de n'importe lesquelles des revendications 7 à 13, comprenant le fait de tirer une fibre de renfort en continu, de mettre en contact la fibre de renfort avec la composition de résine époxy durcissable, et de faire durcir la composition de résine époxy durcissable.

15. Un câble comprenant un noyau entouré d'un conducteur métallique, le noyau comprenant le composite de n'importe lesquelles des revendications 7 à 13.
